# EUROPÄISCHE PATENTSCHRIFT

(11) **EP 0 454 213 B1**
(45) Veröffentlichungstag und Bekanntmachung des Hinweises auf die Patenterteilung: **17.11.1994**
(21) Anmeldenummer: 91200846.3
(22) Anmeldetag: 11.04.1991
(51) Int. Cl.: B60R 21/16, D03D 1/02

(54) **Gassack für Airbag-Systeme**
Gas cushion for an air bag system
Coussin pneumatique pour système de poche d'air

(30) Priorität: 25.04.1990 DE 4013207; 21.08.1990 DE 4026374
(43) Veröffentlichungstag der Anmeldung: 30.10.1991
(73) Patentinhaber: KOLBENSCHMIDT Aktiengesellschaft, D-74150 Neckarsulm (DE)
(72) Erfinder: Barrenscheen, Frank, W-8754 Grossostheim 3 (DE); Kreuzer, Martin, W-8751 Kleinwallstadt (DE)
(74) Vertreter: Rieger, Harald, Dr.

(56) Entgegenhaltungen:
- EP-A- 0 314 867
- CA-A- 974 745
- DE-A- 2 122 704
- DE-C- 3 644 554
- US-A- 3 842 583
- US-A- 3 892 425
- US-A- 4 559 975

## Beschreibung

Die Erfindung betrifft einen Gassack für Airbag-Systeme aus einem in Leinwandbindung ausgeführten Gewebe aus Kunststoffäden.

Bei einem Frontalaufprall bzw. bei Unfällen mit kleinen Winkelabweichungen (< +/- 30°) der Stoßrichtung, welche zusammen mit über 60 % Anteil die häufigste Unfallart darstellen, und bei Geschwindigkeiten von über 18 km/h entwickelt das im Frontteil und/oder im Fahrgastraum von Personenwagen untergebrachte Airbag-System seine Schutzwirkung. Bei einem möglichen Aufprall auf ein massives Hindernis sprechen die Beschleunigungsaufnehmer des Airbag-Systems an. Nach der ersten Berührung (Zeitpunkt T = 0 ms) beginnt der Insasse des Fahrzeugs aufgrund seiner Massenträgheit mit einer Verzögerung nach vorn zu rutschen. Nach 10 ms fängt der Gassack an sich aufzublasen, indem der Zündstrom auf den Zünder des Gasgenerators, der wiederum die Zündpille und damit den Treibsatz zündet, geschaltet wird. Nach Reinigung und Abkühlung gelangt das Gas in den Gassack. Nach 40 bis 50 ms schlägt der Oberkörper auf den nun voll aufgeblasenen Gassack, dessen Aufblaszeit ca. 30 ms beträgt. Über Ausströmöffnungen auf der Gassackrückseite läßt dieser sofort das Gas genau definiert wieder entweichen, wobei der Körper weich und ohne Rückprallkräfte abgefangen wird. Dabei entstehen Drücke im Gassack von 0,4 bis 2,7 bar Überdruck.

Der Gassack für Airbag-Systeme besteht im allgemeinen aus einem Polyamidgewebe, das innenseitig mit Butylkautschuk beschichtet ist, um die erforderliche Gasdichtigkeit des Gewebes zu gewährleisten. Damit der zusammengefaltete Gassack über wenigstens 10 Jahre seine volle Funktion beibehält, ist es notwendig, die Innenseite des Gassacks mit Talkumpuder zu bestreuen, um ein Verkleben der Butylkautschukschicht zu verhindern. Im Falle eines Aufpralls werden Talkumpartikel sowie ggf. Partikel aus der Butylkautschukschicht und Partikel aus der Verbrennung des Treibsatzes über die Ausströmöffnungen des Gassacks in den Fahrgastraum geblasen, so daß eine erhebliche Verschmutzung des Fahrgastraums und eine Belästigung der Insassen eintritt.

Auf die Anwendung von Talkumpuder kann verzichtet werden, wenn die Innenseite des Gassacks mit einer Silikonschicht überzogen ist. Aber auch in diesem Falle ist die Anordnung von Ausströmöffnungen auf der Rückseite des Gassacks erforderlich, über die Partikel aus der Verbrennung des Treibsatzes sowie von der Silikonschicht in den Fahrgastraum austreten können.

Die aus dem Gasgenerator austretenden Feststoffpartikel besitzen eine Korngröße von 3 bis 9 µm, deren Verteilung der Gauß'schen Normalverteilung entspricht.

In neuerer Zeit ist durch die EP-A-0 314 867 ein Gassack für Airbag-Systeme bekannt geworden, der aus einem Gewebe aus Kunststoffäden mit übersättigter Gewebeeinstellung besteht, wobei das Gewebe geschrumpft, thermofixiert sowie bei einer Temperatur zwischen 60 und 250°C, einem Druck zwischen 10 und 100 t und einer Laufgeschwindigkeit zwischen 5 und 25 m/min kalandriert ist. Das Gewebe besitzt eine Leinwandbindung mit 34 Kettfäden/cm und 16 Schußfäden/cm aus jeweils dtex 470. Durch das Schrumpfen, Thermofixieren und Kalandrieren wird das Gewebe so verdichtet, daß es praktisch gasundurchlässig ist. Es kann deshalb auf eine innenseitige Beschichtung des Gewebes verzichtet werden. Abgesehen davon, daß die Schrumpfung, Thermofixierung und Kalandrierung des Gewebes mit einem nicht unbeachtlichen Aufwand verbunden ist, sind bei aus einem solchen Gewebe gefertigten Gassäcken auf der Rückseite Ausströmöffnungen erforderlich, über die aus der Verbrennung des Treibsatzes stammende Feststoffpartikel in den Fahrgastraum des Kraftfahrzeugs ausströmen kann.

Es ist die Aufgabe der vorliegenden Erfindung, einen Gassack für Airbag-Systeme mit der eingangs beschriebenen Gewebeart bereitzustellen, über dessen Gewebe das Gas definiert entweichen, jedoch die aus der Verbrennung des Treibsatzes des Gasgenerators stammenden Feststoffpartikel zurückgehalten werden.

Die Lösung dieser Aufgabe besteht darin, daß das ≧ 470 dtex-Gewebe, vorzugsweise 235 bis 470 dtex-Gewebe, aus 12 bis 23 im Gassackunterteil niedrigschrumpfenden und im Gassackoberteil dehnbaren Fäden/cm besteht. Die niedrigschrumpfenden Fäden weisen jeweils eine effektive Restschrumpfung von max. 3% und die dehnbaren eine Dehnung von 20 bis 30% auf.

Im Rahmen der vorzugsweisen Ausgestaltung besteht das Gewebe des Gassackunterteils aus 16 bis 19, vorzugsweise 16 bis 18,5 Fäden/cm, und das Gewebe des Gassackoberteils aus 21 bis 23,5 Fäden/cm.

Beim Aufblasen des Gassacks durch den gezündeten Treibsatz werden die Fäden des Gewebes so gereckt, daß das Gewebe gegenüber den bei der Verbrennung des Treibstoffs entstandenen Feststoffpartikeln zunächst vollständig dicht ist. Nach dem Aufblasen des Gassacks wird das Gewebe durch den Gasdruck definiert aufgeweitet, so daß sich Öffnungen zwischen den einzelnen Fäden ergeben, die ein genau definiertes Ausströmen des Gases aus dem Gassack nach dem Aufprall des Fahrzeugnisassen zulassen, so daß der auf dem Gassack aufliegende Oberkörper weich und ohne große Rückprallkräfte abgefangen wird.

Je nach Volumen des entfalteten Gassacks ist die Gasdurchlässigkeit des Gewebes durch unterschiedliche Gewebedichte auf 20 bis 80 1/dm2min bis 5 mbar Unterdruck und damit auf den Kraftfahrzeugtyp einstellbar.

Eine ganz besondere Ausführungsform des Gassacks besteht darin, daß das Gewebe des Gassackunterteils aus 17,5 Kettfäden/cm und 17,1 Schußfäden/cm besteht. In diesem Falle weist das Gewebe des Gassackoberteils 22,8 Kettfäden/cm und 20,8 Schußfäden/cm auf.

Es ist jedoch auch möglich, daß das Gassackoberteil aus einem geschrumpften, thermofixierten und kalandrierten Gewebe mit übersättigter Gewebeeinstellung besteht.

Eine für die angestrebte Wirkung besondere Ausgestaltung des Gassacks besteht darin, daß das Gewebe von Gassackunterseite und -oberseite um 45° gegeneinander versetzt angeordnet sind.

Die Verbindung der beiden Gassackteile erfolgt durch Nähen, Verweben oder Schweißen.

Die Erfindung ist in der Zeichnung beispielhaft dargestellt und wird nachfolgend näher erläutert.

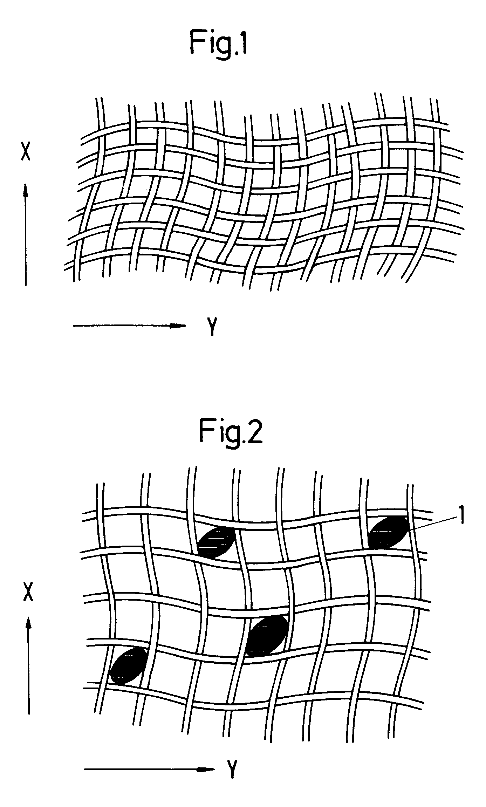

Fig. 1 zeigt einen Ausschnitt aus einem Gassackgewebe, bestehend aus 17,5 Kettfäden/cm (X-Richtung) und 17,1 Schußfäden (Y-Richtung) aus jeweils 470 dtex-Gewebe aus Polyamidfäden. Dieses für die Herstellung des Gassackunterteils verwendete Gewebe besitzt eine Gasdurchlässigkeit von 45 1/dm2min bei 5 mbar Unterdruck.

In Fig. 2 ist das Gassackgewebe nach dem Aufweiten dargestellt, wobei in einem Teil der Öffnungen zwischen den Gewebefäden aus der Verbrennung des Treibsatzes des Gasgenerators stammende Feststoffpartikel (1) während des Aufweitens des Gewebes hängengeblieben sind und über die anderen Öffnungen das Gas abströmen konnte.

## Patentansprüche

1. Gassack für Airbag-Systeme aus einem in Leinwandbindung ausgeführten Gewebe aus Kunststoffäden, vorzugsweise Polyamid, dadurch gekennzeichnet, daß das ≦ 470 dtex-Gewebe aus 12 bis 23 im Gassackunterteil niedrigschrumpfenden und im Gassackoberteil dehnbaren Fäden/cm besteht, wobei die niedrigschrumpfenden Fäden eine effektive Restschrumpfung von max. 3% aufweisen und die dehnbaren Fäden eine Dehnung von 20 bis 30% besitzen.

2. Gassack nach Anspruch 1, gekennzeichnet durch ein 235 bis 470 dtex-Gewebe.

3. Gassack nach Anspruch 1 und 2, dadurch gekennzeichnet, daß das Gewebe des Gassackunterteils aus 16 bis 19, vorzugsweise 16 bis 18,5 Fäden/cm besteht.

4. Gassack nach den Ansprüchen 1 bis 3, dadurch gekennzeichnet, daß das Gewebe des Gassackunterteils aus 17,5 Kettfäden/cm und 17,1 Schußfäden/cm besteht.

5. Gassack nach Anspruch 1 und 2, dadurch gekennzeichnet, daß das Gewebe des Gassackoberteils aus 21 bis 23,5 Fäden/cm besteht.

6. Gassack nach den Ansprüchen 1, 2 und 5, dadurch gekennzeichnet, daß das Gewebe des Gassackoberteils aus 22,8 Kettfäden/cm und 22,8 Schußfäden/cm besteht.

7. Gassack nach Anspruch 1 bis 7, dadurch gekennzeichnet, daß das Gewebe des Gassackunterteils gegenüber dem Gewebe des Gassackoberteils um 45° versetzt angeordnet ist.

## Claims

1. A gas cushion for airbag systems, made from a woven fabric of synthetic threads, preferably polyamide, in a plain weave, characterised in that the ≦ 470 dtex woven fabric consists of 12 to 23 threads/cm which are low-shrinkage in the lower part of the gas cushion and extensible in the upper part of the gas cushion, the low-shrinkage threads having an effective residual shrinkage of at most 3% and the extensible threads having an extension of 20 to 30%.

2. A gas cushion according to Claim 1, characterised by a 235 to 470 dtex woven fabric.

3. A gas cushion according to Claims 1 and 2, characterised in that the fabric of the lower part of the gas cushion consists of 16 to 19, preferably 16 to 18.5, threads/cm.

4. A gas cushion according to Claims 1 to 3, characterised in that the fabric of the lower part of the gas cushion consists of 17.5 warp threads/cm and 17.1 weft threads/cm.

5. A gas cushion according to Claims 1 and 2, characterised in that the fabric of the upper part of the gas cushion consists of 21 to 23.5 threads/cm.

6. A gas cushion according to Claims 1, 2 and 5, characterised in that the fabric of the upper part of the gas cushion consists of 22.8 warp threads/cm and 22.8 weft threads/cm.

7. A gas cushion according to Claims 1 to 7 [sic], characterised in that the fabric of the lower part of the gas cushion is offset by 45° relative to the fabric of the upper part of the gas cushion.

## Revendications

1. Coussin pneumatique pour système à air-bag en un tissu à armure unie en fil de matière plastique, de préférence en polyamide, caractérisé en ce que le tissu ≦ 470 dtex est constitué de 12 à 23 fils/cm à faible retrait dans la partie inférieure du coussin pneumatique et susceptibles de s'allonger dans la partie supérieure du coussin pneumatique, les fils à faible retrait ayant un retrait effectif résiduel de 3 % au maximum et les fils susceptibles de s'allonger ayant un allongement de 20 à 30 %.

2. Coussin pneumatique suivant la revendication 1, caractérisé par un tissu de 235 à 470 dtex.

3. Coussin pneumatique suivant la revendication 1 ou 2, caractérisé en ce que la partie inférieure du coussin pneumatique est constituée de 16 à 19, et de préférence de 16 à 18,5 fils/cm.

4. Coussin pneumatique suivant l'une des revendications 1 à 3, caractérisé en ce que le tissu de la partie inférieure du coussin pneumatique est constitué de 17,5 fils de chaîne/cm et de 17,1 fils de trame/cm.

5. Coussin pneumatique suivant la revendication 1 ou 2, caractérisé en ce que le tissu de la partie supérieure du coussin pneumatique est constituée de 21 à 23,5 fils/cm.

6. Coussin pneumatique suivant l'une des revendications 1, 2 ou 5, caractérisé en ce que le tissu de la partie supérieure du coussin pneumatique est constitué de 22,8 fils de chaîne/cm et de 22,8 fils de trame/cm.

7. Coussin pneumatique suivant l'une des revendications 1 à 7, caractérisé en ce que le tissu de la partie inférieure du coussin pneumatique est décalé de 45° par rapport au tissu de la partie supérieure du coussin pneumatique.
